# EUROPÄISCHE PATENTSCHRIFT

(11) **EP 0 876 274 B1**
(45) Veröffentlichungstag und Bekanntmachung des Hinweises auf die Patenterteilung: **04.09.2002**
(21) Anmeldenummer: 97901597.1
(22) Anmeldetag: 23.01.1997
(51) Int. Cl.: B62K 19/06, B62K 3/10, B62K 19/34

(54) **EINSTÜCKIGER FAHRRADROHRRAHMEN**
INTEGRAL BICYCLE TUBULAR FRAME
CADRE TUBULAIRE MONOBLOC POUR BICYCLETTE

(30) Priorität: 24.01.1996 DE 19602423
(43) Veröffentlichungstag der Anmeldung: 11.11.1998
(73) Patentinhaber: Schauff, Hans, 53424 Remagen (DE)
(72) Erfinder: SCHAUFF, Axel, D-53424 Remagen (DE)
(74) Vertreter: Lenzing, Andreas, Dr.
(86) Internationale Anmeldenummer: EP9700307
(87) Internationale Veröffentlichungsnummer: WO97027098

(56) Entgegenhaltungen:
- EP-A- 0 091 655
- EP-A- 0 675 036
- DE-A- 4 142 619
- DE-A- 19 547 988
- FR-A- 987 557
- US-A- 3 091 479
- PATENT ABSTRACTS OF JAPAN vol. 006, no. 017 (M-109), 30.Januar 1982 & JP 56 136245 A (BRIDGESTONE CYCLE CO), 24.Oktober 1981,

## Beschreibung

Die vorliegenden Erfindung betrifft einen Rohrrahmen für ein Fahrrad mit der Merkmalen des Oberbegriffs des Anspruchs 1.

Gattungsgemäße Fahrradrahmen werden üblicherweise aus Rohrabschnitten gefertigt, die auf das entsprechende Maß zugeschnitten und gegebenenfalls gebogen oder verjüngt werden. Diese Rohrabschnitte werden zum Teil als komplette Rohrsätze für Fahrradrahmen geliefert und dann beim Rahmenhersteller in eine Rahmenlehre eingesetzt, in der sie in der geometrisch richtigen Anordnung manuell verschweißt oder in Muffen verlötet werden. Dabei sind der Lenkkopf und das Tretlagergehäuse separate Muffen oder separate Rohrabschnitte, die mit den übrigen Rahmenrohren verschweißt werden müssen. Nach dem Schweißen oder Löten muß der Rahmen dann noch feingerichtet werden. Die Konstruktion und Fertigung von Fahrradrahmen ist in dem vorveröffentlichten Buch "Fahrradtechnik", 8. Auflage, Bielefeld 1993, auf den Seiten 44 - 118 beschrieben.

Ein Fahrrad mit guten Federungseigenschaften ist in der FR 987.557 beschrieben. Dort wird ein bogenförmiger Rohrrahmen gezeigt, der vom Lenkkopf aus zum Tretlager, zur Hinterachse und dann zum Sattel verläuft. Dabei ist der Radius des bogenförmigen Rahmens mehrfach variiert. Ein derartiger Rahmen ist maschinell schwierig herzustellen. Weiter ist aus der US 3,091,479 ein Fahrradrahmen bekannt, der im Bereich des Lenkkopfes eine Biegung aufweist, dann in zunächst gerader Linie auf den tiefsten Punkt zu verläuft. Im Bereich des Tretlagers folgt ein Bogen von etwa 125° mit relativ kleinem Radius, woran wiederum ein gerader Abschnitt anschließt, der im Sitzkopf endet. Dieser Rahmen ist insgesamt sehr steif, da an den Übergangsstellen die Materialstärke so gehalten sein muß, daß dort im Fahrbetrieb ausschließlich elastische Verformungen auftreten. Die Verformungen selbst, die als Eigenfederung des Rahmens wirken, sind deshalb minimal. Ein derartiger Fahrradrahmen ist deshalb ohne zusätzliche Federung relativ unkomfortabel.

Ausgehend von den bekannten Fahrradrahmen ist es Aufgabe der vorliegenden Erfindung, einen Fahrradrahmen zu schaffen, dessen Fertigung in einem höheren Grad automatisierbar ist und der im Fahrbetrieb vorteilhafte Federungseigenschaften aufweist.

Diese Aufgabe wird von einem Fahrradrahmen mit den Merkmalen des Anspruchs 1 gelöst.

Besonders vorteilhaft wird ein Rohrrahmen gefertigt, wenn das Tretlagergehäuse mittels Werkstoffumformung in den Rohrrahmen eingeformt ist. Umformungsverfahren sind insbesondere an dieser hochbelasteten Stelle des Fahrradrahmens deshalb vorteilhaft, weil sie die Struktur des Rahmenmaterials nicht oder nur unwesentlich schwächen. Wenn der Lenkkopf, der Sitzkopf und das Tretlager von einem durchgehenden Rahmenrohr ohne Werkstoffunterbrechung miteinander verbunden sind, sind die drei wesentlichen Aufnahmestellen für Anbauteile automatisch in den Rohrrahmen einfügbar. Sofern der Rohrrahmen mit Tretlager, Sitzkopf und Lenkkopf automatisch gefertigt ist, muß lediglich der Hinterbau an den Rahmen angeschweißt werden, was zu einer drastischen Verringerung der in Handarbeit durchzuführenden Herstellungsschritte führt.

Eine vereinfachte, aber dennoch vorteilhafte. Herstellungsmöglichkeit für den Lenkkopfbereich ergibt sich, wenn der Lenkkopf wenigstens einen mit dem Rahmenrohr einstückigen, hülsenartigen Bereich aufweist, in den ein Lenkkopflager unmittelbar oder unter Verwendung von Paßstücken oder unter Verwendung eines Lenkkopfrohres einsetzbar ist. Diese Möglichkeit kann gewünscht sein, wenn aufgrund der Rahmengeometrie, insbesondere der Winkelstellung oder des Durchmessers des Rahmenrohres, durch Umformung kein Lenkkopf geschaffen werden kann, der einen ausreichenden Abstand zwischen der oberen und der unteren Lagerschale erlaubt.

Das Tretlagergehäuse kann ebenfalls während der Bearbeitung auf einer Werkzeugmaschine mit einem Einschraubgewinde versehen werden, so daß vorteilhaft das Tretlager mittels wenigstens einer Schraubhülse in dem Tretlagergehäuse befestigbar ist. Die maschinelle Bearbeitung des Tretlagergehäuses erlaubt Fertigungstoleranzen, die auch die Verwendung von nicht geschraubten Tretlagern erlauben. So kann das Tretlager mittels Einpressen oder Einkleben in dem Tretlagergehäuse befestigt werden, was die Montage weiter vereinfacht. Eine günstige Einbauposition für das Tretlager ergibt sich, wenn das Tretlagergehäuse mittig, insbesondere im Bereich der neutralen Faser in dem Rahmenrohr angeordnet ist. Hier ist die strukturelle Schwächung des Rahmenrohres am geringsten. Weitere Automatisierbarkeit der Herstellung ergibt sich, wenn der Sitzkopf wenigstens einen mit dem Rahmenrohr einstückigen, hülsenartigen Bereich aufweist, in den eine Sattelstütze unmittelbar oder unter Verwendung eines Sitzrohres einsetzbar ist.

In der Zeichnung sind Ausführungsbeispiele von erfindungsgemäßen Fahrradrahmen dargestellt.

Es zeigen:
- Fig. 1:: Einen erfindungsgemäßen Fahrradrahmen mit niedrigem Durchstieg in einer schematischen Darstellung von der Seite;
- Fig. 2:: ein Tretlagergehäuse für einen erfindungsgemäßen Fahrradrahmen;
- Fig. 3:: einen Lenkkopf für einen erfindungsgemäßen Fahrradrahmen; sowie

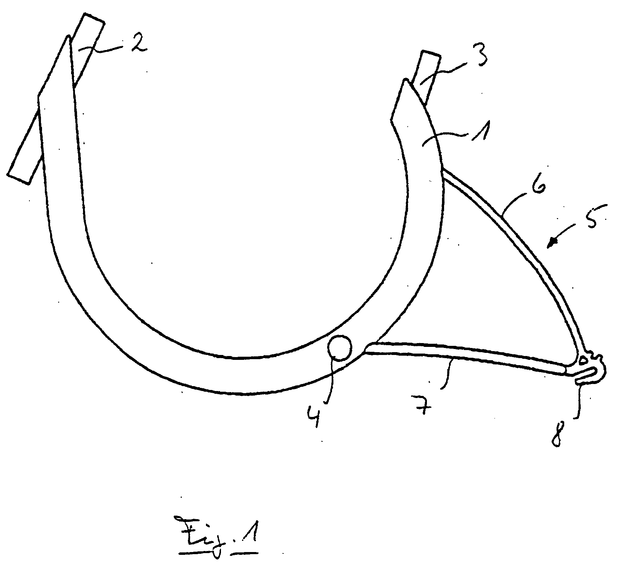

In der Figur 1 ist ein Ausführungsbeispiel eines erfindungsgemäßen Fahrradrahmens dargestellt. Ein Zentralrohrrahmen 1, beispielsweise in Gestalt eines Aluminiumrohres mit rundem Querschnitt, verläuft von einem Lenkkopf 2 nach unten und dann kontinuierlich gekrümmt bis zu einem Sitzkopf 3. Ein Tretlagergehäuse 4 ist in dem Zentralrohr 1 an der geometrisch üblichen Position vorgesehen, d. h., die Verbindungslinie zwischen dem Sitzkopf 3 und dem Tretlager 4 bildet einen Winkel von rund 75° mit der Horizontalen. Der Durchmesser des Zentralrohres 1 ist bei diesem Ausführungsbeispiel größer als der Durchmesser des Tretlagergehäuses 4. Zwischen dem Sitzkopf 3 und dem Tretlagergehäuse 4 ist an der Außenseite der Rohrkrümmung ein im wesentlichen konventioneller Hinterbau 5 mit Sitzstreben 6, Kettenstreben 7 und Ausfallenden 8 angeschweißt oder angelötet.

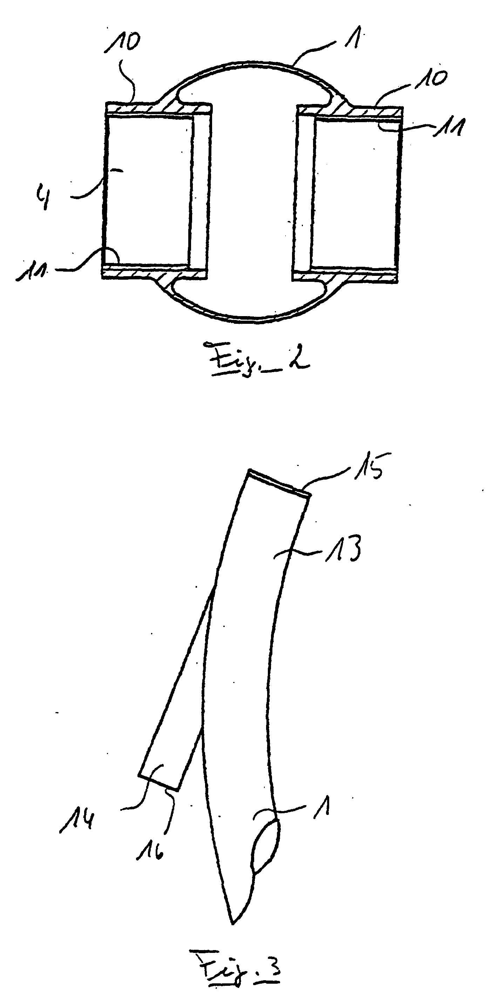

Das Tretlagergehäuse 4 ist einstückig mit dem Zentralrohr 1. So kann zum Beispiel ein durch numerisch gesteuerte Biegemaschinen gebogenes und durch numerisch gesteuerte Schneidvorrichtungen zugeschnittenes Zentralrohr 1 in Richtung der späteren Tretlagerachse, also senkrecht zu der Zeichenebene der Figur 1, im sogenannten Fließbohrverfahren durchsetzt werden. Dabei wird ein mit hoher Drehzahl rotierender Dorn durch das Bohrmaterial hindurchgepreßt und durch das Zusammenwirken von hoher Druckkraft und hoher Drehzahl das Material des Rohres an dem Bohrungsrand verdrängt. Es findet also eine Warmumformung statt, die eine Hülse mit der mehrfachen Materialstärke der ursprünglichen Rohrwandung entstehen läßt. Die entstandene Hülse sowie ihr spiegelsymmetrisches Gegenstück auf der gegenüberliegenden-Seite der Rohrwandung des Zentralrohres 1 kann unmittelbar oder nach einer geeigneten Nachbehandlung das Tretlagergehäuse 4 bilden. Ein solches Tretlagergehäuse 4 ist in der Figur 2 im Querschnitt dargestellt. Die relativ dünne Wandung des Zentralrohres 1 ist oben und unten zwischen zwei Hülsen 10 in der ursprünglichen Dicke veranschaulicht. Die Hülsen 10 sind an sich diametral gegenüberliegenden Stellen des Zentralrohres 1 angeformt, wobei durch die Warmumformung das Material aus der Rohrwandung in Richtung der Wandung der Hülsen 10 verdrängt worden ist. Weil dabei in das Zentralrohr 1 eine Bohrung eingebracht wird, das verdrängte Material jedoch nicht abgetragen, sondern in die Hülse 10 umgeformt wird, wird die Wandstärke der Hülse 10 größer als diejenige des ursprünglichen Zentralrohres 1. Die vergrößerte Wandstärke des Tretlagergehäuses 4 weist eine ausreichende Stabilität für die Aufnahme eines Fahrradtretlagers auf. Es ist für die Stabilität des Tretlagergehäuses 4 außerdem förderlich, daß durch das Umformverfahren die Materialeigenschaften zumindest nicht nachteilig beeinflußt werden, sondern je nach Auswahl des Rahmenmaterials für den Zentralrohrrahmen 1 sogar verbessert werden. In die Hülsen 10 des Tretlagergehäuses 4 können zur Befestigung von konventionellen Tretlagern Gewinde 11 eingebracht werden, es ist aber auch denkbar, das Tretlager einzupressen oder einzukleben.

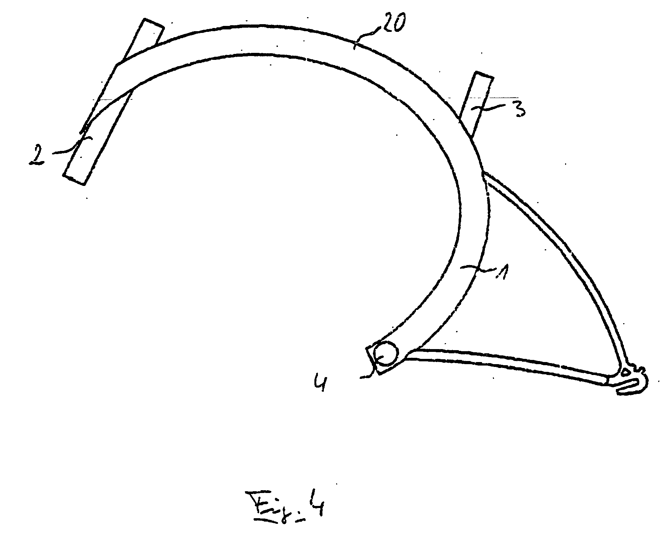

In der Figur 3 ist schematisch ein Steuerkopf 13 dargestellt, der ein Steuerkopfrohr 14 trägt. Das Steuerkopfrohr 14 ist in den Zentralrohrrahmen 1 in eine Hülse eingesetzt, die ebenfalls einstückig den Zentralrohrrahmen in Richtung der Achse des Steuerrohres 14 durchsetzt. Eine solche Hülse kann ebenfalls im Fließbohrverfahren durch Warmumformung in den Steuerkopf eingebracht werden, wobei der Durchmesser der zu formenden Hülse dem Außendurchmesser des Steuerkopfrohres entspricht. Außerdem ist an dem freien Ende des Zentralrohres 1 bei 15 das Rahmenrohr, so daß eine obere Lagerschale eines Lenkkopflagers eingesetzt werden kann. Bei 16 kann die dazugehörige untere Lagerschale des Lenkkopflagers eingesetzt werden und eine konventionelle Fahrradgabel kann in den so vorbereiteten Lenkkopf in bekannter Weise eingesetzt werden.

## Patentansprüche

1. Rohrrahmen für ein Fahrrad aus einem metallischen Werkstoff, mit einem Lenkkopf (2), einem Sitzkopf (3) und einem Tretlagergehäuse (4), wobei ein durchgehendes Rahmenrohr (1) ausgehend von dem Lenkkopf (2) zu dem Tretlagergehäuse (4) und von da zu dem Sitzkopf (3) verläuft, **dadurch gekennzeichnet, daß** der Rohrrahmen über mehr als die Hälfte seiner Länge zwischen dem Lenkkopf (2) und dem Sitzkopf (3), kreisbogenförmig über einen Winkel von mehr als 150° gestaltet ist.

2. Rohrrahmen nach.Anspruch 1, **dadurch gekennzeichnet, daß** der Lenkkopf (2), der Sitzkopf (3) und das Tretlager (4) von dem durchgehenden Rahmenrohr (1) ohne Werkstoffunterbrechung miteinander verbunden sind.

3. Rohrrahmen nach einem der vorhergehenden Ansprüche, **dadurch gekennzeichnet, daß** das Tretlagergehäuse (4) mittels Werkstoffumformung in den Rohrrahmen (1) eingeformt ist.

4. Rohrrahmen nach einem der vorhergehenden Ansprüche, **dadurch gekennzeichnet, daß** der Lenkkopf (2) wenigstens einen mit dem Rahmenrohr (1) einstückigen hülsenartigen Bereich aufweist, in den ein Lenkkopflager unmittelbar oder unter Verwendung von Paßstücken oder unter Verwendung eines Lenkkopfrohres einsetzbar ist.

5. Rohrrahmen nach einem der vorhergehenden Ansprüche, **dadurch gekennzeichnet, daß** das Tretlager mittels wenigstens einer Schraubhülse in dem Tretlagergehäuse (4) befestigt ist.

6. Rohrrahmen nach einem der vorhergehenden Ansprüche, **dadurch gekennzeichnet, daß** das Tretlager mittels Einpressen oder Kleben in dem Tretlagergehäuse (4) befestigt ist.

7. Rohrrahmen nach einem der vorhergehenden Ansprüche, **dadurch gekennzeichnet, daß** das Tretlagergehäuse (4) mittig, insbesondere im Bereich der neutralen Faser in dem Rahmenrohr (1) angeordnet ist.

8. Rohrrahmen nach einem der vorhergehenden Ansprüche, **dadurch gekennzeichnet, daß** der Sitzkopf (3) wenigstens einen mit dem Rahmenrohr (1) einstückigen hülsenartigen Bereich aufweist, in den eine Sattelstütze unmittelbar oder unter Verwendung eines Sitzrohres einsetzbar ist.

9. Rohrrahmen nach einem der vorhergehenden Ansprüche, **dadurch gekennzeichnet, daß** Gewindeanschlüsse für Zubehörteile zumindest zum Teil mittels Umformverfahren das Rahmenrohr (1) eingeformt sind.

## Claims

1. Tubular frame for a bicycle made from a metallic material, with a handlebar stub (2), a seat stub (3) and a bottom bracket bea-ring housing (4), whereby a continuous frame tubing (1) runs from the handlebar stub (2) to the bottom bracket bearing housing (4) and from there to the seat stub (3), **characterised in that** the tubular frame is designed over more than half its length between the handlebar stub (2) and the seat stub (3), arc-shaped at an angle of more than 150°.

2. Tubular frame according to claim 1, **characterised in that** the handlebar stub (2), the seat stub (3) and the bottom bracket bearing (4) are joined with each other by the continuous frame tubing (1) without any break in the material.

3. Tubular frame according to one of the above claims, **characterised in that** the bottom bracket bearing housing (4) is created by a forming operation of the tubular frame (1).

4. Tubular frame according to one of the above claims, **characterised in that** the handlebar stub (2) has at least one sleeve-type area which is a single piece with the frame tubing (1), in which a handlebar stub bearing can be inserted directly or by using adapters or a handlebar stub tube.

5. Tubular frame according to one of the above claims, **characterised in that** the bottom bracket bearing is secured by means of at least one threaded sleeve in the bottom bracket bearing housing (4).

6. Tubular frame according to one of the above claims **characterised in that** the bottom bracket bearing is secured in the bottom bracket bearing housing (4) by pressing or cementing.

7. Tubular frame according to one of the above claims, **characterised in that** the bottom bracket bearing housing (9) is arranged centrally, in particular in the area of the neutral fibres in the frame tubing (1).

8. Tubular frame according to one of the above claims, **characterised in that** the seat stub (3) has at least one sleeve-type area which is a single piece with the frame tubing (1), in which a saddle support can be inserted directly or by using a seat tube.

9. Tubular frame according to one of the above claims, **characterised in that** threaded connections for accessories are created at least partly by a forming operation of the frame tubing (1).

## Revendications

1. Cadre tubulaire pour une bicyclette en matériau métallique, comportant une tête de guidon (2), une tête de selle (3) et un boîtier de palier de pédalier (4), un tube de cadre continu (1) partant de la tête de guidon (2) s'étendant jusqu'au boîtier de palier de pédalier (4) et depuis celui-ci jusqu'à la tête de selle (3), **caractérisé en ce que** le cadre tubulaire est réalisé, sur plus de la moitié de sa longueur entre la tête de guidon (2) et la tête de selle (3), en forme d'arc de cercle sur un angle de plus de 150°.

2. Cadre tubulaire selon la revendication 1, **caractérisé en ce que** la tête de guidon (2), la tête de selle (3) et le palier de pédalier (4) sont reliés les uns aux autres par le tube de cadre continu (1) sans interruption du matériau.

3. Cadre tubulaire selon l'une des revendications précédentes, **caractérisé en ce que** le boîtier de palier de pédalier (4) est conformé dans le cadre tubulaire (1) au moyen d'une déformation de matériau.

4. Cadre tubulaire selon l'une des revendications précédentes, **caractérisé en ce que** la tête de guidon (2) comprend au moins une zone en forme de douille d'un seul tenant avec le cadre tubulaire (1), dans laquelle un palier de tête de guidon peut venir en place directement ou en utilisant des pièces d'adaptation ou en utilisant un tube de tête de guidon.

5. Cadre tubulaire selon l'une des revendications précédentes, **caractérisé en ce que** le palier de pédalier est fixé au moyen d'au moins une douille vissée dans le boîtier de palier de pédalier (4).

6. Cadre tubulaire selon l'une des revendications précédentes, **caractérisé en ce que** le palier de pédalier est fixé par enfoncement à la presse ou par collage dans le boîtier de palier de pédalier (4).

7. Cadre tubulaire selon l'une des revendications précédentes, **caractérisé en ce que** le boîtier de palier de pédalier (4) est agencé au milieu, en particulier dans la zone de la fibre neutre dans le tube de cadre (1).

8. Cadre tubulaire selon l'une des revendications précédentes, **caractérisé en ce que** la tête de selle (3) comprend au moins une zone en forme de douille d'un seul tenant avec le tube de cadre (1), dans laquelle peut venir en place un porte-selle directement ou en utilisant un tube de selle.

9. Cadre tubulaire selon l'une des revendications précédentes, **caractérisé en ce que** des raccords à pas de vis pour des pièces accessoires sont conformés dans le tube de cadre (1) au moins partiellement au moyen d'un procédé de déformation.
